# EUROPÄISCHE PATENTSCHRIFT

(11) **EP 2 762 300 B1**
(45) Veröffentlichungstag und Bekanntmachung des Hinweises auf die Patenterteilung: **06.04.2016**
(21) Anmeldenummer: 13000538.2
(22) Anmeldetag: 01.02.2013
(51) Int. Cl.: B30B 15/34, B27N 3/20, F26B 23/10, B29C 35/04, B29C 43/52, B27N 3/06, B29C 35/02

(54) **Holzwerkstoffplatten-Heißpressenanlage und Verfahren zum Betreiben einer derartigen Anlage**
Wood material panel hot press plant and method for operating such a plant
Installation de presse à chaud pour plaques de matière première en bois et procédé de fonctionnement d'une telle installation

(43) Veröffentlichungstag der Anmeldung: 06.08.2014
(73) Patentinhaber: Kronotec AG, 6006 Luzern (CH)
(72) Erfinder: Iredi, Matthias, 6052 Hergiswil NW (CH)
(74) Vertreter: Plöger, Jan Manfred

(56) Entgegenhaltungen:
- WO-A1-2010/024220
- JP-A- S63 309 400
- JP-A- 2001 353 741
- JP-A- 2008 111 665
- US-A1- 2003 136 280
- US-B1- 6 367 304

## Beschreibung

Die Erfindung betrifft eine Holzwerkstoffplatten-Heißpressenanlage mit (a) einem Primärkreis, der eine Vorlaufleitung zum Abführen eines heißen Wärmeübertragerfluids von einem Wärmeerzeuger und eine Rücklaufleitung zum Zuführen von abgekühltem Wärmeübertragerfluid zum Wärmeerzeuger aufweist, (b) einem Sekundärkreis, der eine Pressvorrichtung zum Pressen von Holzwerkstoffplatten, eine Zuleitung zum Zuleiten von Wärmeübertragerfluid zur Pressvorrichtung und eine Rückleitung zum Zurückleiten von abgekühltem Wärmeübertragerfluid zum Primärkreis aufweist, und (c) einer Regelvorrichtung, die ein Regelventil besitzt und eingerichtet ist zum Regeln eines Zustroms an Wärmeübertragerfluid vom Primärkreis zum Sekundärkreis, insbesondere von der Vorlaufleitung zur Zuleitung.

Gemäß einem zweiten Aspekt betrifft die Erfindung ein Verfahren zum Betreiben einer derartigen Holzwerkstoffplatten-Heißpressenanlage.

Derartige Holzwerkstoffplatten-Heißpressenanlagen sind aus der US 2003/136280 A1 bekannt und werden verwendet, um aus getrockneten Holzpartikeln, die mit einem Leim vermischt sind, durch Pressen eine Holzwerkstoffplatte herzustellen. Derartige Heißpressenanlagen sind zum kontinuierlichen Betrieb eingerichtet, das heißt, dass sie kontinuierlich mit Holzpartikeln, die mit Leim vermischt sind, beschickt werden und einen beständigen Strom an Holzwerkstoffplatten produzieren.

Holzwerkstoffplatten-Heißpressenanlagen werden in der Regel nur angehalten, wenn ein Defekt vorliegt oder wenn die Anlage auf die Produktion von Holzwerkstoffplatten mit anderen Abmessungen umgerüstet werden soll. Bei jedem Wiederanfahren kommt es zu einer Anlaufzeit, in der kein verwertbares Produkt hergestellt wird, sondern Ausschuss. Bei häufigem Wiederanfahren der Pressenanlage kann es damit zu beträchtlichem Ausschuss kommen.

Der Erfindung liegt die Aufgabe zugrunde, die Produktivität einer Holzwerkstoffplatten-Heißpressenanlage zu verbessern.

Die Erfindung löst das Problem durch eine gattungsgemäße Holzwerkstoffplatten-Heißpressenanlage mit den Merkmalen des Anspruchs 1.

Gemäß einem zweiten Aspekt löst die Erfindung das Problem durch ein Verfahren mit den Merkmalen des Anspruchs 8.

Bislang wird der Zustrom an Wärmeübertragerfluid, bei dem es sich in der Regel um ein Thermoöl handelt, ausschließlich über die Temperatur, beispielsweise des Rücklaufs, geregelt. Ändert sich der Wärmebedarf der Pressvorrichtung, beispielsweise weil das zu pressende Holzmaterial einen höheren Wassergehalt aufweist, so führt dies zunächst dazu, dass die Temperatur des Thermoöls absinkt. Dem wird durch ein verstärktes Zugeben von heißem Thermoöl entgegengeregelt. Nachteilig daran ist, dass es sich stets um ein reagierendes Regeln handelt. Im Gegensatz dazu ist es ist durch die erfindungsgemäße Lösung möglich, vorausschauend die Heizleistung zu erhöhen, wenn mit einem erhöhten Bedarf an Heizleistung zu rechnen ist.

Wird beispielsweise die Pressvorrichtung nach einer Umrüstung oder nach einem Störfall wieder angefahren, so ist der Bedarf an Heizleistung erhöht, bis die Temperatur einer Pressplatte der Pressvorrichtung die richtige Temperatur hat. Bei herkömmlichen Systemen dauert das Einregeln der Temperatur relativ lange, da der Sekundärkreis aufgrund der großen Menge an Wärmeübertragerfluid eine beträchtliche thermische Trägheit besitzt. Bei herkömmlichen Systemen steigen daher die Temperatur und damit die Heizleistung kontinuierlich an, bis der stationäre Zustand erreicht ist.

Wird jedoch, wie erfindungsgemäß vorgesehen, die Heizleistung geregelt, so steigt die Temperatur an der Pressvorrichtung zu Beginn sehr schnell an. Der stationäre Zustand kann dadurch deutlich schneller erreicht werden. Insgesamt sinkt daher der Ausschuss.

Um die Heizleistung zu erhöhen, kann einerseits die Zulauftemperatur erhöht und/oder der Volumenstrom zur Pressvorrichtung vergrößert werden. Sofern eine maximal zulässige Zulauftemperatur nicht überschritten ist und/oder eine maximal zulässige Temperaturdifferenz nicht überschritten ist, ist es vorteilhafter, das Regelventil weiter zu öffnen und so die Heizleistung zu erhöhen. Auf diese Weise kann eine Sekundär-Umwälzpumpe im Sekundärkreis mit einer elektrischen Leistung betrieben werden, die stets dicht bei der Leistung ist, die unabdingbar notwendig ist, um die Heizleistung zur Verfügung zu stellen. Kann die Temperatur nicht weiter erhöht werden, weil entweder einer der beiden oben genannten Grenzwerte überschritten ist oder das Regelventil voll geöffnet ist, wird die Fördermenge einer Primär-Umwälzpumpe im Primärkreis erhöht.

Wenn die Heizleistung nicht verändert werden soll, wird selbstverständlich kein Regeleingriff durchgeführt.

Vorzugsweise ist die Regeleinrichtung eingerichtet zum automatischen Erfassen, ob die Temperaturdifferenz einen vorgegebenen Maximalwert überschritten hat und bejahendenfalls zum Verringern des Öffnungsgrads des Regelventils

Vorzugsweise umfasst die Holzwerkstoffplatten-Heißpressenanlage eine Feuchtigkeitsmessvorrichtung, die ausgebildet ist zum Messen eines Wassergehalts im Holzwerkstoffmaterial, das zur Pressanlage gefördert wird, wobei die Regelvorrichtung mit der Feuchtigkeitsmessvorrichtung verbunden und eingerichtet ist zum automatischen Verändern der Heizleistung in Abhängigkeit vom Wassergehalt. Ein hoher Wassergehalt im Holzwerkstoffmaterial erfordert eine erhöhte Heizleistung, damit die Restfeuchte in der fertigen Holzwerkstoffplatte konstant bleibt. Dadurch, dass die Heizleistung geregelt wird, wird stets genau die Wärmemenge in die entstehende Holzwerkstoffplatte eingebracht, die notwendig ist, um eine vorgegebene Restfeuchte in der fertigen Holzwerkstoffplatte zu erreichen. Bei einer Temperatursteuerung, wie sie aus dem Stand der Technik bekannt ist, führt die thermische Trägheit des Sekundärkreises dazu, dass die Restfeuchtigkeit in der fertigen Holzwerkstoffplatte schwanken kann.

Vorzugsweise besitzt der Primärkreis eine fördermengenvariable, insbesondere eine drehzahlgeregelte, Primär-Umwälzpumpe und einen Differenzdrucksensor, mittels dem eine Primär-Druckdifferenz zwischen einem Vorlauf-Druck des Wärmeübertragerfluids in der Primär-Vorlaufleitung und einem Rücklauf-Druck des Wärmeübertragerfluids in der Primär-Rücklaufleitung ermittelbar ist, wobei die Primär-Umwälzpumpe eingerichtet ist zum Regeln der Fördermenge auf eine Soll-Primär-Druckdifferenz. Das stellt sicher, dass bei konstanter Stellung des Regelventils stets die gleiche Menge an Wärmeübertragerfluid vom Primärkreis in den Sekundärkreis übertritt. Das erleichtert die Regelung der Heizleistung in der Pressvorrichtung.

Besonders günstig ist es, wenn die Regelvorrichtung ausgebildet ist zum automatischen Erhöhen der Soll-Primär-Druckdifferenz, wenn das Regelventil in einer Maximalstellung und die Heizleistung zu erhöhen ist. Insbesondere ist die Regelvorrichtung ausgebildet zum automatischen Erhöhen der Soll-Primärdruckdifferenz, wenn das Regelventil in der Maximalstellung ist und die Heizleistung zu erhöhen ist.

Günstig ist es, wenn das Zwei-Wege-Regelventil ein pneumatisches Zwei-Wege-Regelventil mit elektropneumatischem Stellglied ist. Ein derartiges Regelventil ist besonders schnell bedienbar, so dass die Einregelzeit besonders klein wird.

Ein erfindungsgemäßes Verfahren wird vorzugsweise so durchgeführt, dass eine Antriebsleistung der Primär-Umwälzpumpe und/oder der Sekundär-Umwälzpumpe minimiert wird bzw. werden. Das erfolgt insbesondere unter den Randbedingungen, dass eine maximale Temperaturdifferenz zwischen Zulauf- und Rücklauftemperatur im Sekundärkreis nicht überschritten werden darf und das die Zulauftemperatur im Sekundärkreis eine vorgegebene Maximaltemperatur nicht überschreiten darf. Vorteilhaft hieran ist, dass die Holzwerkstoffplatten-Heißpressenanlage im Teillastbereich besonders wirtschaftlich betrieben werden kann.

Vorzugsweise umfasst das erfindungsgemäße Verfahren die Schritte eines Veränderns der Pressvorrichtung, so dass eine Holzwerkstoffplatte mit einer veränderten Dicke und/oder einer veränderten Breite produzierbar wird, eines Ermittelns einer Stellung des Regelventils, die der Dicke und/oder Breite zugeordnet ist, eines Voreinstellens des Regelventils auf die ermittelte Stellung und eines Wiederanfahrens der Pressvorrichtung. In anderen Worten wird das Regelventil unmittelbar beim Wiederanfahren der Pressvorrichtung auf diejenige Stellung gebracht, die dazu führt, dass die Pressvorrichtung zumindest mit der Heizleistung versorgt wird, die zum Dauerbetrieb der Pressvorrichtung bei der gegebenen Dicke und Breite benötigt wird. Besonders günstig ist es, wenn das Regelventil auf eine Stellung eingestellt wird, die einer Heizleistung entspricht, die größer ist als diejenige Heizleistung, die zum Dauerbetrieb der Pressvorrichtung bei der gegebenen Dicke und Breite benötigt wird. Die Pressvorrichtung wird damit schnell aufgeheizt und so schnell die gewünschte Produktqualität erreicht. Das verringert den Prozesszeitfaktor.

Das Ermitteln der Stellung des Regelventils kann beispielsweise ein Auslesen und/oder ein Interpolieren eines Kennfeldes beinhalten. In diesem Kennfeld sind die möglichen Dimensionen der zu fertigenden Holzwerkstoffplatte diejenigen Heizleistungen oder Stellungen des Regelventils zugeordnet, die für die Herstellung der Holzwerkstoffplatte benötigt werden.

Vorzugsweise wird zu jeder Abmessung der zu fertigenden Holzwerkstoffplatte auch der Wassergehalt des Holzwerkstoffmaterials, das der Pressvorrichtung zugeführt wird, abgespeichert. In anderen Worten wird die Stellung des Regelventils und damit die Heizleistung der thermisch in Abhängigkeit von den Dimensionen der zu fertigen Holzwerkstoffplatte und der Restfeuchtigkeit des Holzwerkstoffmaterials, aus dem die Holzwerkstoffplatte gepresst wird, gewählt.

Vorzugsweise wird die Primärdruckdifferenz durch Erhöhen einer Leistung der Primär-Umwälzpumpe erhöht, wenn das Regelventil eine Maximalstellung erreicht hat. Vorzugsweise wird die Leistung der Primär-Umwälzpumpe erhöht, wenn das Regelventil eine Maximalstellung erreicht hat und die Heizleistung, die dem Sekundärkreis durch den Primärkreis zugeführt wird, kleiner ist als die benötigte Heizleistung. Durch diese Maßnahmen kommt das Regelventil wieder in den Regelbereich.

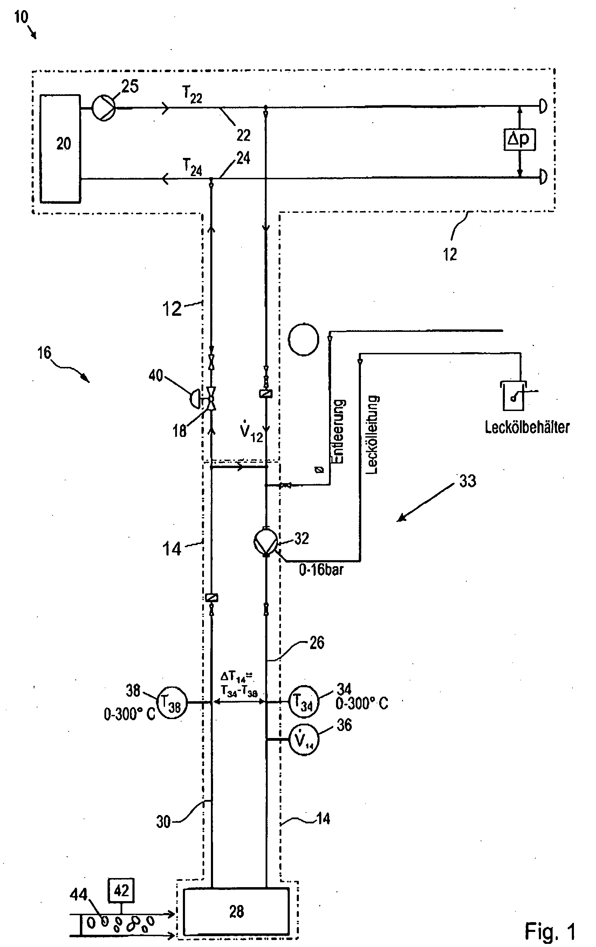

Im Folgenden wird die Erfindung anhand der beigefügten Zeichnungen näher erläutert. Dabei zeigt
- Figur 1: ein Flussdiagramm einer erfindungsgemäßen Holzwerkstoffplatten-Heißpressenanlage.

Figur 1 zeigt eine Holzwerkstoffplatten-Heißpressenanlage 10, die einen Primärkreis 12, einen Sekundärkreis 14 und eine Regelvorrichtung 16 aufweist, die ein Regelventil 18 umfasst.

Der Primärkreis 12 besitzt einen Wärmeerzeuger 20 in Form einer Kesselanlage, eine Vorlaufleitung 22 zum Abführen von erhitztem Wärmeübertragerfluid vom Wärmeerzeuger 20 und eine Rücklaufleitung 24, in der abgekühltes Wärmeübertragerfluid, das durch ein Thermoöl gebildet wird, zurückläuft. Der Primärkreis 12 umfasst eine Primär-Umwälzpumpe 25, die eingerichtet ist zum Einstellen einer Druckdifferenz Δp zwischen Vorlaufleitung 22 und Rücklaufleitung 24. Dazu hat der Primärkreis 12 einen Differenzdrucksensor 27.

Der Sekundärkreis 14 umfasst eine Zuleitung 26 zum Zuleiten von Thermoöl zu einer Pressvorrichtung 28 und eine Rückleitung 30, in der von der Pressvorrichtung 28 kommendes Thermoöl zurückfließt.

Der Sekundärkreis 14 umfasst zudem eine Sekundär-Umwälzpumpe 32, mittels der das Thermoöl umgewälzt wird, und eine Heizleistungserfassungsvorrichtung 33, die einen Zulauftemperaturmesser 34, einen Volumenstrommesser 36 und einen Rücklauftemperaturmesser 38 umfasst. Aus einer Temperaturdifferenz ΔT₁₄ = T₃₄ - T₃₈ zwischen Zulauftemperatur T₃₄ und Rücklauftemperatur T₃₈, einem Volumenstrom *V̇*₄ sowie der spezifischen Wärmekapazität und der Dichte des Thermoöls lässt sich Heizleistung P berechnen, die der Pressvorrichtung 28 zugeführt wird.

Die Regelvorrichtung 16 umfasst eine elektrische Steuerung 40, die mit dem Zulauftemperaturmesser 34, dem Volumenstrommesser 36, dem Rücklauftemperaturmesser 38 und dem Regelventil 18 elektrisch verbunden und eingerichtet ist zum automatischen Regeln der Heizleistung P, die der Pressvorrichtung 28 zugeführt wird. Dazu wird das Regelventil 18 so angesteuert, dass sich ein Volumenstrom *V̇*₁₂ an Wärmeübertrager vom Primärkreis 12 in den Sekundärkreis 14 einstellt, der so groß ist, dass sich die Heizleistung P einstellt. Es sei darauf hingewiesen, dass in aller Regel *V̇*₁₄ ≠ *V̇*₁₂ gilt.

Die elektrische Steuerung 14 ist zudem mit einer Feuchtigkeitsmessvorrichtung 42 verbunden, die einen Wassergehalt w von Holzwerkstoffmaterial 44 misst, das der Pressvorrichtung 28 zum Pressen zugeführt wird. Die zum Pressen benötigte Heizleistung P variiert in Abhängigkeit vom Wassergehalt w. Wird von der Feuchtigkeitsmessvorrichtung 42 eine Veränderung des Wassergehalts w detektiert, so passt diese die Heizleistung P an.

Das Regelventil 18 ist als pneumatisches Regelventil mit elektropneumatischen Stellungsregler und Stellungsrückmeldung ausgebildet. Da eine Vorlauftemperatur T₂₂ in guter Näherung konstant ist und die Druckdifferenz Δp im Bereich des Regelventils 18 ebenfalls konstant gehalten wird, entspricht eine Stellung des Regelventils in guter Näherung einer Heizleistung P, die vom Primärkreis 12 an den Sekundärkreis 14 übertragen wird.

Soll ein Format einer schematisch eingezeichneten zu produzierenden Holzwerkstoffplatte 46, bei der es sich beispielsweise um eine mitteldichte Faserplatte, eine hochdichte Faserplatte oder eine OSB-Platte oder eine Spanplatte handeln kann, geändert werden, wird beispielsweise eine Pressplatte ausgetauscht, mittels der Wärme vom Thermoöl auf den Pressling übertragen wird. Zum Wiederanfahren der Pressvorrichtung 28 wird das Regelventil 18 auf diejenige Stellung gebracht, die dazu führt, dass der Pressvorrichtung 28 die Heizleistung P(x, z, w) zugeführt wird, die zur Herstellung einer Holzwerkstoffplatte mit der Breite x, der Höhe z und dem Wassergehalt w des Holzwerkstoffmaterials 44 gehört.

Die Heizleistung P(x, z, w) wird beispielsweise aus einem digitalen Speicher der elektrischen Steuerung 40 ausgelesen. Sofern sich das Format der zu produzierenden Holzwerkstoffplatte nicht ändert, wird vor dem Herunterfahren der Pressvorrichtung 28 die Stellung des Regelventils 18 ausgelesen und gespeichert. Zum Wiederanfahren der Pressvorrichtung 28 wird das Regelventil 18 auf diese Stellung gebracht.

Es ist möglich, dass kleinere Abweichungen von dieser Stellung vorgenommen werden, beispielsweise kann das Regelventil 18 etwas weiter geöffnet werden, so dass die Heizleistung zunächst größer ist als eigentlich benötigt, so dass die Pressvorrichtung 28 besonders schnell auf Temperatur gebracht wird.

### Bezugszeichenliste

| | | | |
|---|---|---|---|
| 10 | Holzwerkstoffplatten-Heißpressenanlage | V̇ | Volumenstrom |
| | | V̇₁₄ | Zustrom zu Sekundärkreis |
| 12 | Primärkreis | P | Heizleistung |
| 14 | Sekundärkreis | w | Wassergehalt |
| 16 | Regelvorrichtung | Δ*p* | Druckdifferenz |
| 18 | Regelventil | T₃₄ | Zulauftemperatur im Sekundärkreis |
| 20 | Wärmeerzeuger | T₃₈ | Rücklauftemperatur im Sekundärkreis |
| 22 | Vorlaufleitung | | |
| 24 | Rücklaufleitung | Δ*T*₁₄ | Temperaturdifferenz |
| 25 | Primär-Umwälzpumpe | | |
| 26 | Zuleitung | | |
| 27 | Differenzdrucksensor | | |
| 28 | Pressvorrichtung | | |
| | | | |
| 30 | Rückleitung | | |
| 32 | Sekundär-Umwälzpumpe | | |
| 33 | Heizleistungserfassungsvorrichtung | | |
| 34 | Zulauftemperaturmesser | | |
| 36 | Volumenstrommesser | | |
| 38 | Rücklauftemperaturmesser | | |
| | | | |
| 40 | Elektrische Steuerung | | |
| 42 | Feuchtigkeitsmessvorrichtung | | |
| 44 | Holzwerkstoffmaterial | | |
| 46 | Holzwerkstoffplatte | | |

## Patentansprüche

1. Holzwerkstoffplatten-Heißpressenanlage mit
(a) einem Primärkreis (12), der
- eine Primär-Umwälzpumpe,
- eine Vorlaufleitung (22) zum Abführen eines heißen Wärmeübertragerfluids von einem Wärmeerzeuger (20) und
- eine Rücklaufleitung (24) zum Zuführen von abgekühltem Wärmeübertragerfluid zum Wärmeerzeuger (20) aufweist,
(b) einem Sekundärkreis (14), der
- eine Pressvorrichtung (28) zum Pressen von Holzwerkstoffplatten (46),
- eine Zuleitung (26) zum Zuleiten von Wärmeübertragerfluid zur Pressvorrichtung (28) und
- eine Rückleitung (30) zum Zurückleiten von abgekühltem Wärmeübertragerfluid zum Primärkreis (12) aufweist, und
(c) einer Regelvorrichtung (16), die
- ein Regelventil (18) besitzt und
- eingerichtet ist zum Regeln eines Zustroms an Wärmeübertragerfluid vom Primärkreis (12) zum Sekundärkreis (14),
**gekennzeichnet durch**
(d) eine fördermengenvariable Sekundär-Umwälzpumpe (32), die angeordnet ist zum Umwälzen des Wärmeübertragerfluids im Sekundärkreis (14), und/oder das Regelventil (18) ein Zwei-Wege-Regelventil ist, das eine Stellungsrückmeldevorrichtung umfasst,
e) wobei die Regelvorrichtung (16)
(i) eine Heizleistungserfassungsvorrichtung (33), die
- einen Zulauftemperaturmesser (34) zum Messen einer Zulauftemperatur (T₃₄) des Wärmeübertragerfluids, der im Sekundärkreis (14) zu der Pressvorrichtung (28) strömt, und
- einen Rücklauftemperaturmesser (38) zum Messen einer Rücklauftemperatur (T₃₈) des Wärmeübertragerfluids, der im Sekundärkreis (14) von der Pressvorrichtung (28) zurückströmt, besitzt,
aufweist und
(ii) eingerichtet ist zum automatischen Regeln einer Heizleistung (P), die der Pressvorrichtung (28) zugeführt wird, anhand eines Volumenstroms (*V̇*) an Wärmeübertragerfluid **durch** den Sekundärkreis (14) und einer Temperaturdifferenz (Δ*T*₁₄) zwischen Zulauftemperatur (T₃₄) und Rücklauftemperatur (T₃₈) im Sekundärkreis (14).

2. Holzwerkstoffplatten-Heißpressenanlage nach Anspruch 1, **dadurch gekennzeichnet, dass** die Heizleistungserfassungsvorrichtung (33) einen Volumenstrommesser (36) zum Erfassen eines Volumenstroms (*V̇*) an den Wärmeübertrager durch den Sekundärkreis (14) umfasst.

3. Holzwerkstoffplatten-Heißpressenanlage nach einem der Ansprüche 1 oder 2, **dadurch gekennzeichnet, dass** die Regelvorrichtung (16) eingerichtet ist zum automatischen Erfassen, ob das Regelventil (18) eine Maximalstellung erreicht hat und
bejahendenfalls Erhöhen der Fördermenge der Primär-Umwälzpumpe im Primärkreis (12) und
verneinendenfalls Erhöhen eines Öffnungsgrads des Regelventils (18)
wenn die Heizleistung (P) zu erhöhen ist.

4. Holzwerkstoffplatten-Heißpressenanlage nach einem der Ansprüche 1 bis 3, **dadurch gekennzeichnet, dass** die Regelvorrichtung (16) eingerichtet ist zum automatischen Erfassen, ob die Temperaturdifferenz (Δ*T*₁₄) einen vorgegebenen Maximalwert überschritten hat und
bejahendenfalls Verringern des Öffnungsgrads des Regelventils (18).

5. Holzwerkstoffplatten-Heißpressenanlage nach einem der vorstehenden Ansprüche, **gekennzeichnet durch**
- eine Feuchtigkeitsmessvorrichtung (42), die angeordnet ist zum Messen eines Wassergehalts (w) im Holzwerkstoffmaterial (44), das zur Pressanlage gefördert wird,
- wobei die Regelvorrichtung (16) mit der Feuchtigkeitsmessvorrichtung (42) verbunden ist und eingerichtet ist zum automatischen Verändern der Heizleistung in Abhängigkeit vom Wassergehalt (w).

6. Holzwerkstoffplatten-Heißpressenanlage nach einem der vorstehenden Ansprüche, **dadurch gekennzeichnet, dass** der Primärkreis (12)
- eine fördermengenvariable, insbesondere eine drehzahlgeregelte, Primär-Umwälzpumpe (25) und
- einen Differenzdrucksensor (27),
mittels dem eine Primär-Druckdifferenz (Δ*p*) zwischen einem Vorlauf-Druck des Wärmeübertragerfluids in der Vorlaufleitung (22) und einem Rücklauf-Druck des Wärmeübertragerfluids in der Rücklaufleitung (24) ermittelbar ist, aufweist
- wobei die Primär-Umwälzpumpe eingerichtet ist zum Regeln der Fördermenge auf eine Soll-Primär-Druckdifferenz (Δ*p*).

7. Holzwerkstoffplatten-Heißpressenanlage nach Anspruch 6, **dadurch gekennzeichnet, dass** die Regelvorrichtung (16) ausgebildet ist zum automatischen Erhöhen der Soll-Primär-Druckdifferenz (Δ*p*), wenn das Regelventil (18) in einer Maximalstellung ist und die Heizleistung (P) zu erhöhen ist.

8. Verfahren zum Betreiben einer Holzwerkstoffplatten-Heißpressenanlage (10), die
(a) einen Primärkreis (12), der
- eine Vorlaufleitung (22) zum Abführen des heißen Wärmeübertragerfluids von einem Wärmeerzeuger (20),
- eine Rücklaufleitung (24) zum Zuführen von abgekühltem Wärmeübertragerfluid zum Wärmeerzeuger (20) und
- eine Primär-Umwälzpumpe zum Umwälzen des Wärmeübertragerfluids aufweist,
(b) einen Sekundärkreis (14), der
- eine Pressvorrichtung (28) zum Pressen von Holzwerkstoffplatten (46) umfasst,
- eine Zuleitung (26) zum Zuleiten von Wärmeübertragerfluid zur Pressvorrichtung (28) und
- eine Rückableitung zum Zurückleiten von abgekühltem Wärmeübertragerfluid zum Primärkreis (12) aufweist, und
(c) eine Regelvorrichtung (16), die ein Regelventil (18) besitzt, aufweist, **gekennzeichnet durch** den Schritt:
(i) Regeln der Heizleistung (P), die der Pressvorrichtung (28) zugeführt wird, **durch** Verändern eines Zustroms (V̇₁₄) an Wärmeübertragerfluid vom Primärkreis (12) zum Sekundärkreis (14) anhand des Volumenstroms (*V̇*) und einer Temperaturdifferenz (Δ*T*₁₄) zwischen Zulauftemperatur (T₃₄) und Rücklauftemperatur (T₃₈) im Sekundärkreis (14)
(ii) wobei das Regeln der Heizleistung zumindest auch so durchgeführt wird, dass eine Antriebsleistung der Sekundär-Umwälzpumpe (32) verändert wird.

9. Verfahren nach Anspruch 8, **dadurch gekennzeichnet, dass** das Regeln der Heizleistung zumindest auch so durchgeführt wird, dass eine Antriebsleistung der Primär-Umwälzpumpe (25) verändert wird.

10. Verfahren nach Anspruch 8, **gekennzeichnet durch** die Schritte:
- Erhöhen der Heizleistung (P),
- Verändern der Pressvorrichtung (28), so dass eine Holzwerkstoffplatte (46) mit einer veränderten Dicke und/oder Breite produzierbar wird,
- Ermitteln einer Stellung des Regelventils (18), die der Dicke und/oder Breite zugeordnet ist,
- Voreinstellen des Regelventils (18) auf die ermittelte Stellung und
- Wiederanfahren der Pressvorrichtung (28).

11. Verfahren nach einem der Ansprüche 8 bis 10, **gekennzeichnet durch** die Schritte:
- kontinuierliches Erfassen eines Wassergehalts (w) im zu pressenden Holzwerkstoffmaterial (44),
- Ermitteln einer Heizleistung, die dem Wassergehalt (w) zugeordnet ist, und
- Einstellen des Regelventils (18), so dass sich die Heizleistung einstellt.

12. Verfahren nach einem der Ansprüche 8 bis 11, **dadurch gekennzeichnet, dass** die Primär-Druckdifferenz (Δ*p*) durch Erhöhen einer Leistung der Primär-Umwälzpumpe erhöht wird, wenn das Regelventil (18) eine Maximalstellung erreicht hat.

## Claims

1. A wood material board hot-pressing device with
(a) a primary circuit (12), with
- a primary circulation pump,
- a supply pipe (22) for the discharging of hot heat transfer fluid from a heat generator (20) and
- a return pipe (24) for the supplying of cooled heat transfer fluid to the heat generator (20),
(b) a secondary circuit (14), with
- a pressing device (28) for pressing wood material boards (46),
- a supply channel (26) for the supplying of heat transfer fluid to the pressing device (28) and
- a return channel (30) for the returning of cooled heat transfer fluid to the primary circuit (12), and
(c) a controlling device (16), which
- comprises a control valve (18) and
- is set up to regulate a flow of heat transfer fluid from the primary circuit (12) to the secondary circuit (14),
**characterised by**
(d) a variable output secondary circulation pump (32), which is set up to circulate the heat transfer fluid in the secondary circuit (14), and/or the control valve (18) being a two-way control valve which includes a position indicator,
(e) wherein the controlling device (16)
(i) features a heat output recording device (33), with
- an inlet temperature gauge (34) to measure an inlet temperature (T₃₄) of the heat transfer fluid, which flows in the secondary circuit (14) to the pressing device (28), and
- a return temperature gauge (38) to measure the return temperature (T₃₈) of the heat transfer agent, which flows back in the secondary circuit (14) from the pressing device (28).
and
(ii) is set up to automatically regulate a heat output (P), sent to the pressing device (28), by reference to the volumetric flow (*V̇*) of heat transfer fluid through the secondary circuit (14) and a temperature difference (Δ*T*₁₄) between inlet temperature (T₃₄) and return temperature (T₃₈) in the secondary circuit (14).

2. The wood material board hot-pressing device according to claim 1, **characterised by** the fact that the heat output recording device (33) has a volumetric flow gauge (36) for the recording of the volumetric flow (*V*) of the heat transfer agent through the secondary circuit (14).

3. The wood material board hot-pressing device according to one of claims 1 or 2, **characterised by** the fact that the controlling device (16) is set up to automatically record whether the control valve (18) has reached the maximum position and
in the affirmative to increase the output of the primary circulation pump in the primary circuit (12) and
in the negative to increase the degree to which the control valve (18) is open (18)
if the heat output (P) is to be increased.

4. The wood material board hot-pressing device according to one of claims 1 to 3, **characterised by** the fact that the controlling device (16) is set up to automatically record whether the temperature difference (Δ*T*₁₄) has exceeded a given maximum value and
in the affirmative to reduce the degree to which the control valve (18) is open.

5. The wood material board hot-pressing device according to one of the abovementioned claims, **characterised by**
- a moisture gauge (42), which is programmed to measure the water content (w) of the wood material (44) which is brought into the pressing device,
- the controlling device (16) being connected to the moisture gauge (42) and is set up to automatically alter the heat output according to the water content (w).

6. The wood material board hot-pressing device according to one of the abovementioned claims, **characterised by** the fact that the primary circuit (12) features
- a variable-output, particularly speed-controlled, primary circulation pump (25) and
- a differential pressure sensor (27),
by means of which the primary pressure difference (Δ*p*) between the initial pressure of the heat transfer fluid in the supply pipe (22) and the return pressure of the heat transfer fluid in the return pipe (24) can be calculated,
- the primary circulation pump being set up to regulate the output according to a target primary pressure difference (Δ*p*).

7. The wood material board hot-pressing device according to claim 6, **characterised by** the fact that the controlling device (16) is programmed to automatically increase the target primary pressure difference (Δ*p*), if the control valve (18) is in the maximum position and the heat output (P) is to be increased.

8. A method for operating a wood material board hot-pressing device (10) comprising
(a) a primary circuit (12), which features
- a supply pipe (22) for the discharging of hot heat transfer fluid from the heat generator (20) and
- a return pipe (24) for the supplying of cooled heat transfer fluid to the heat generator (20),
- a primary circulation pump for the circulation of the heat transfer fluid,
(b) a secondary circuit (14), which has
- a pressing device (28) for the compression of wood material boards (46),
- a supply channel (26) for the supplying of heat transfer fluid to the pressing device (28) and
- a return channel (30) for the returning of cooled heat transfer fluid to the primary circuit (12), and
(c) a controlling device (16), which contains a control valve (18),
the method **characterized by** the following step:
(i) the controlling of the heat output (P) which is supplied to the pressing device (28), by altering the flow (V̇₁₄) of heat transfer fluid from the primary circuit (12) to the secondary circuit (14) through reference to the volumetric flow (*V̇*) and the temperature difference (Δ*T*₁₄) between the inlet temperature (T₃₄) and return temperature (T₃₈) in the secondary circuit (14)
(ii) the regulation of the heat output is also at least effected in such a way that the driving power of the secondary circulation pump (32) is altered.

9. The method according to claim 8, **characterised by** the fact that the regulation of the heat output is also at least effected in such a way that the driving power of the primary circulation pump (25) is altered.

10. The method according to claim 8, **characterised by** the following steps:
- increasing the heat output (P),
- altering the pressing device (28), so that a wood material board (46) with an altered thickness and/or width can be produced,
- determining a position of the control valve (18), which corresponds to the thickness and/or width,
- pre-setting the control valve (18) to the determined position and
- restarting the pressing device (28).

11. The method according to one of claims 8 to 10, **characterised by** the following steps:
- continuously recording the water content (w) in the wood material to be compressed (44),
- determining the heat output which corresponds to the water content (w), and
- adjusting the control valve (18) so that heat output is adjusted.

12. The method according to one of claims 8 to 11, **characterised by** the fact that the primary pressure difference (Δ*p*) is increased by increasing an output of the primary circulation pump if the control valve (18) has reached the maximum position.

## Revendications

1. Installation de pressage à chaud de plaques en matériau à base de bois comprenant
(a) un circuit primaire (12) qui comprend
- une pompe de recirculation primaire,
- un conduit d'amenée (22) pour évacuer un fluide de transfert thermique chaud depuis un générateur de chaleur (20) et
- un conduit de retour (24) pour amener le fluide de transfert thermique refroidi au générateur de chaleur (20),
(b) un circuit secondaire (14), qui comprend
- un dispositif de pressage (28) pour presser des plaques en matériau à base de bois (46),
- un conduit d'alimentation (26) pour alimenter le fluide de transfert thermique au dispositif de pressage (28) et
- un conduit de retour (30) pour ramener le fluide de transfert thermique refroidi au circuit primaire (12), et
(c) un dispositif de régulation (16),
- qui possède une valve de régulation (18) et
- qui est adapté pour réguler un flux de fluide de transfert thermique depuis le circuit primaire (12) vers le circuit secondaire (14), **caractérisée par**
(d) une pompe de recirculation secondaire (32) à refoulement quantitatif variable, qui est agencée pour produire une recirculation du fluide de transfert thermique dans le circuit secondaire (14), et/ou la valve de régulation (18) est une valve de régulation à deux voies, qui inclut un dispositif d'indication de position,
(e) dans laquelle le dispositif de régulation (16)
(i) comprend un dispositif de détection de puissance de chauffage (33)
- qui possède un moyen de mesure de température d'alimentation (34) pour mesurer une température d'alimentation (T₃₄) du fluide de transfert thermique qui s'écoule dans le circuit secondaire (14) vers le dispositif de pressage (28), et
- qui possède un moyen de mesure de température de retour (38) pour mesurer une température de retour (T₃₈) du fluide de transfert thermique qui s'écoule dans le circuit secondaire (14) en retour depuis le dispositif de pressage (28),
et
(ii) est agencé pour réguler automatiquement une puissance de chauffage (P) qui est alimentée au dispositif de pressage (28) au moyen d'un flux volumétrique (*V̇*) de fluide de transfert thermique via le circuit secondaire (14) et d'une différence de température (ΔT₁₄) entre la température d'alimentation (T₃₄) et une température de retour (T₃₈) dans le circuit secondaire (14).

2. Installation de pressage à chaud de plaques en matériau à base de bois selon la revendication 1, **caractérisée en ce que** le dispositif de détection de puissance de chauffage (33) inclut un moyen de mesure de flux volumétrique (36) pour détecter un flux volumétrique (*V̇*) de fluide de transfert thermique à travers le circuit secondaire (14).

3. Installation de pressage à chaud de plaques en matériau à base de bois selon la revendication 1 ou 2, **caractérisée en ce que** le dispositif de régulation (16) est conçu pour détecter automatiquement si la valve de régulation (18) a atteint une position maximale, et
si oui, pour augmenter la quantité refoulée par la pompe de recirculation primaire dans le circuit primaire (12) et
si non, pour augmenter un degré d'ouverture de la valve de régulation (18)
lorsque la puissance de chauffage (P) doit être augmentée.

4. Installation de pressage à chaud de plaques en matériau à base de bois selon l'une des revendications 1 à 3, **caractérisée en ce que** le dispositif de régulation (16) est conçu pour détecter automatiquement si la différence de température (ΔT₁₄) a dépassé une valeur maximale prédéterminée et
si oui, pour réduire le degré d'ouverture de la valve de régulation (18).

5. Installation de pressage à chaud de plaques en matériau à base de bois selon l'une des revendications précédentes, **caractérisée par**
- un dispositif de mesure d'humidité (42), qui est agencé pour mesurer une teneur en eau (w) dans le matériau à base de bois (44) qui est convoyé vers l'installation de pressage,
- dans laquelle le dispositif de régulation (16) est relié au dispositif de mesure d'humidité (42) et conçu pour modifier automatiquement la puissance de chauffage en fonction de la teneur en eau (w).

6. Installation de pressage à chaud de plaques en matériau à base de bois selon l'une des revendications précédentes, **caractérisée en ce que** le circuit primaire (12)
- comprend une pompe de recirculation primaire (25) à refoulement quantitatif variable, en particulier avec régulation de vitesse de rotation, et
- comprend un capteur de pression différentielle (27) au moyen duquel peut être déterminée une différence de pression primaire (Δp) entre une pression d'amenée du fluide de transfert thermique dans le conduit d'amenée (22) et une pression de retour du fluide de transfert thermique dans le conduit de retour (24),
- et la pompe de recirculation primaire est conçue pour réguler le refoulement quantitatif à une différence de pression primaire de consigne (Δp).

7. Installation de pressage à chaud de plaques en matériau à base de bois selon la revendication 6, **caractérisée en ce que** le dispositif de régulation (16) est réalisé pour augmenter automatiquement la différence de pression primaire de consigne (Δp) quand la valve de régulation (18) est dans une position maximale et que la puissance de chauffage (P) doit être augmentée.

8. Procédé pour le fonctionnement d'une installation de pressage à chaud de plaque en matériau à base de bois (10) qui comprend
(a) un circuit primaire (12) qui comprend
- un conduit d'amenée (22) pour évacuer le fluide de transfert thermique chaud depuis un générateur de chaleur (20),
- un conduit de retour (24) pour alimenter le fluide de transfert thermique refroidi au générateur de chaleur (20), et
- une pompe de recirculation primaire pour faire circuler le fluide de transfert thermique,
(b) un circuit secondaire (14) qui comprend
- un dispositif de pressage (28) pour presser des plaques en matériau à base de bois (46),
- un conduit d'alimentation (26) pour alimenter du fluide de transfert thermique au dispositif de pressage (28) et
- un conduit de retour pour ramener du fluide de transfert thermique refroidi vers le circuit primaire (12), et
(c) un dispositif de régulation (16) qui possède une valve de régulation (18),
**caractérisé par** l'étape consistant à :
(i) réguler la puissance de chauffage (P) qui est alimentée au dispositif de pressage (28) par modification d'un flux (*V̇*₁₄) de fluide de transfert thermique depuis le circuit primaire (12) vers le circuit secondaire (14) au moyen du flux volumétrique (*V̇*) et d'une différence de température (ΔT₁₄) entre la température d'alimentation (T₃₄) et la température de retour (T₃₈) dans le circuit secondaire (14)
(ii) de sorte que la régulation de la puissance de chauffage peut au moins être exécutée également de telle façon qu'une puissance d'entraînement de la pompe de recirculation secondaire (32) est modifiée.

9. Procédé selon la revendication 8, **caractérisé en ce que** la régulation de la puissance de chauffage est au moins exécutée également de telle façon qu'une puissance d'entraînement de la pompe de recirculation primaire (25) est modifiée,

10. Procédé selon la revendication 8, **caractérisé par** les étapes consistant à :
- augmenter la puissance de chauffage (P),
- modifier le dispositif de pressage (28) de telle manière qu'il est possible de produire une plaque en matériau à base de bois (46) avec une épaisseur et/ou une largeur modifiée,
- déterminer une position de la valve de régulation (18) qui est associée à l'épaisseur et/ou à la largeur,
- prérégler la valve de régulation (18) à la position déterminée et
- redémarrer le dispositif de pressage (28).

11. Procédé selon l'une des revendications 8 à 10, **caractérisé par** les étapes consistant à :
- détecter en continu une teneur en eau (w) dans le matériau à base de bois (44) à presser,
- déterminer une puissance de chauffage qui est associée à la teneur en eau (w), et
- régler la valve de régulation (18) de telle sorte que la puissance de chauffage s'établit.

12. Procédé selon l'une des revendications 8 à 11, **caractérisé en ce que** la différence de pression primaire (Δp) est augmentée en augmentant une puissance de la pompe de recirculation primaire quand la valve de régulation (18) a atteint une position maximale.
